# EUROPEAN PATENT APPLICATION

(11) **EP 1 154 671 A1**
(43) Date of publication of application: **14.11.2001**
(21) Application number: 01304039.9
(22) Date of filing: 03.05.2001
(51) Int. Cl.: H04Q 11/04

(54) **Switching matrix for a telecommunications network and method of connection handling in a switching matrix**

(30) Priority: 11.05.2000 DE 10023037
(71) Applicant: Marconi Communications GmbH, 71522 Backnang (DE)
(72) Inventor: Götzer, Martin, 71522 Backnang (DE)
(74) Representative: Webb, Peter Reginald

(57) **Abstract**

A switching matrix comprises an input stage (2) for assigning incoming data to a connection, a memory element (4) having a plurality of FIFO's (9) which are each time assigned to a connection to buffer-store the incoming data, an output stage (3) to emit the data buffer-stored in the FIFO's (9), and a control unit (5). The control unit (5) is set up to define a sub-area of the memory element (4) as an FIFO (9) and to assign it to a transmission connection extending across the switching matrix.

## Description

The present invention relates to a switching matrix for a telecommunications network, particularly one using narrow-band technology, and to a method of connection handling in a switching matrix.

For a long time a distinctive feature of narrow-band telecommunications technology was 64 kbps-oriented circuit switched channels for telephone, fax and data connections. These were switched in timed switching matrixes, which were able to process one byte each 8 kHz clock cycle.

Technical development is aiming to combine various data transmission techniques, such as the 64 kbps connection technique conventionally used for voice telephony, and techniques for remote data transmission, on a single system, the ATM network.

In transmission on the ATM principle, useful information and signalling information are exchanged in the form of packets of constant length, the so-called cells. These cells do not have any fixed position in a time frame and instead they are generated in a quantity which is fundamentally variable and which meets the requirements which exist at the time. The transmission bandwidth available to an application or service on the ATM network is therefore not a fixed one assigned to it and instead the transmission bandwidth required, i.e. the number of cells to be transmitted within a time slot, is announced by the source of the information when a connection is made on the network.

Conventional switching matrixes with a fixed transmission rate are not very suitable for handling narrow-band transmissions on ATM connections because they do not cater for the variable transmission rates which can occur on ATM connections. If more than one byte of data has to be handled on a given connection during one of the switching matrix's clock cycles, the proportion which exceeds the transmission capacity of the switching matrix has to be buffer-stored. If the data rate on the connection exceeds the transmission rate of the switching matrix for an extended period, the storage capacity of the buffer-store will be exceeded and there will be a risk of data being lost. The transmission rates on individual connections may differ enormously on an ATM network, and for this reason it is also uneconomical to, for example, increase the operating clock frequency of a switching matrix and thus raise its handling rate to a level such that every connection can be handled reliably even when the data rate on it is the maximum which is possible.

For transmissions on the AAL1 or AAL2 layer of ATM, packet-oriented switching matrixes have been developed, but even these do not meet all the requirements. It is for example known for 64 kbit/s channels to be transmitted in a grouped form on an access network to the ATM network using a plesiosynchronous (PDH) or synchronous (SDH) technique. A group of this kind consists of a plurality of individual connections which each need to be switched separately. This is possible at a pinch with a packet-oriented switching matrix, if it can be ensured that each packet only contains data belonging to an individual connection, but this is something which cannot readily be accomplished with grouped transmission. For this reason, past approaches to the problem of switching 64 kbit/s connections on an ATM system envisage the AAL being terminated, a conventional 64 kbit/s switching matrix and the AAL then being regenerated.

For future ATM-based networks, there are a large number of options for narrow-band transmission under discussion, such as a circuit emulation service via ATM adaptation layer 1 (AAL1) which is described in The ATM Forum: "Circuit Emulation Service Interoperability Specification Version 2.0", af-vtoa 0078.000, January 1997, dynamical bandwidth circuit emulation (DBCES) via AAL1 (see The ATM Forum "(DBCES) Dynamical Bandwidth Utilization in Time-Slot Trunking over ATM - Using CES", af-vtoa 0085.000, July 1997), and AAL1 trunking, AAL2 trunking or IP telephony via AAL5.

The diversity of transmission techniques makes it necessary to have so-called gateways for converting transmission data from one technique to another.

### Advantages of the invention

The present invention provides a switching matrix, particularly for handling narrow-band services in an ATM environment, which is inexpensive and is capable of handling connections which use a variety of different transmission techniques.

Also provided is a method of connection handling which allows connections of this kind employing different transmission techniques to be handled in a switching matrix.

In a switching matrix for a switching system, which comprises an input stage for assigning incoming data to a connection, a memory element for buffer-storing this data and an output stage for emitting the buffer-stored data as required by the assigned connection, and a control unit, these advantages are achieved by virtue of the fact that the control unit is set up to define a sub-area of the memory element as an FIFO and to assign it to a transmission connection extending across the switching matrix.

A dynamic assignment of memory area of this kind to each individual connection makes it possible for the size of the memory area assigned to be specified to suit the data rate transmitted on the connection or the transmission technique employed. For example, in a switching matrix having a clock rate of 8 kHz, a 64 kbit/s connection can be allotted an FIFO having n x 1-byte storage locations, whereas a packet-oriented connection is allocated an FIFO with the capacity to accommodate n packets.

Hence, in accordance with the invention, a 64 kbit/s connection is treated as a packet-oriented connection with a packet size of 1 byte.

How large the number n is, can usefully be decided as a function of the volume of traffic through the switching matrix. Where the volume of traffic is low, the number n can be made large so that a large number of packets can be buffered in the switching matrix, which will allow a uniform output of data from the switching matrix even when the input of data to it is not uniform.

However, because the number of FIFO's which can be accommodated in a memory element of finite size is smaller the larger they are, as the volume of traffic rises so too does the risk of conflicts, i.e. the risk that new connections cannot be set up because there is no FIFO space available for them. Provision may therefore be made for the number n to be made smaller the greater is the volume of traffic or in other words the greater is the proportion of the storage capacity of the memory element which is occupied by existing connections.

The functions involved in measuring the volume of traffic or monitoring the proportion of the memory element occupied by FIFO's are usefully performed by the control unit.

The control unit also advantageously contains means for monitoring the amount of data stored in each FIFO. When this means finds that the amount of data contained in a given FIFO is equal to or greater than the packet size on the connection concerned, the control unit causes a packet to be emitted by the output stage.

By using the means for monitoring the amount of data stored in each FIFO, the control unit is also usefully in a position to monitor the distribution of the areas occupied by FIFO's in the memory element and, if required, to move individual FIFO's to new areas of the memory to counteract any excessive fragmentation of the storage space.

As mentioned above, it is known per se for 64 kbit/s channels to be transmitted in a grouped form on access networks to the ATM network using a plesiosynchronous or synchronous technique. When a plurality of such connections are being transmitted in a group on the ATM network, it may happen that amongst them there are inactive connections on which only blank data is being transmitted. To relieve the load on the switching matrix when such connections are being transmitted, provision is made in a preferred embodiment for the control unit to be capable of determining whether a connection is active or inactive and, where a connection is inactive, of causing the blank data arriving on this connection to be suppressed at the input stage and regenerated again at the output stage. In this way the blank data is not passed through the memory element and instead the control unit merely passes on a message from the input stage relating to the inactivity of a connection and bypasses the memory element. Thus the inactive connections do not take up any of the handling capacity of the switching matrix and hence do not entail any cost to the operator of the switching matrix.

Other features and advantages of the invention will become apparent from the following description of embodiments, which refers to the accompanying figures.

### Figures

- Fig.1: is a schematic block circuit diagram of a switching matrix according to the invention and
- Fig.2: shows an example of the process by which the memory element of the switching matrix is occupied.

### Description of embodiments

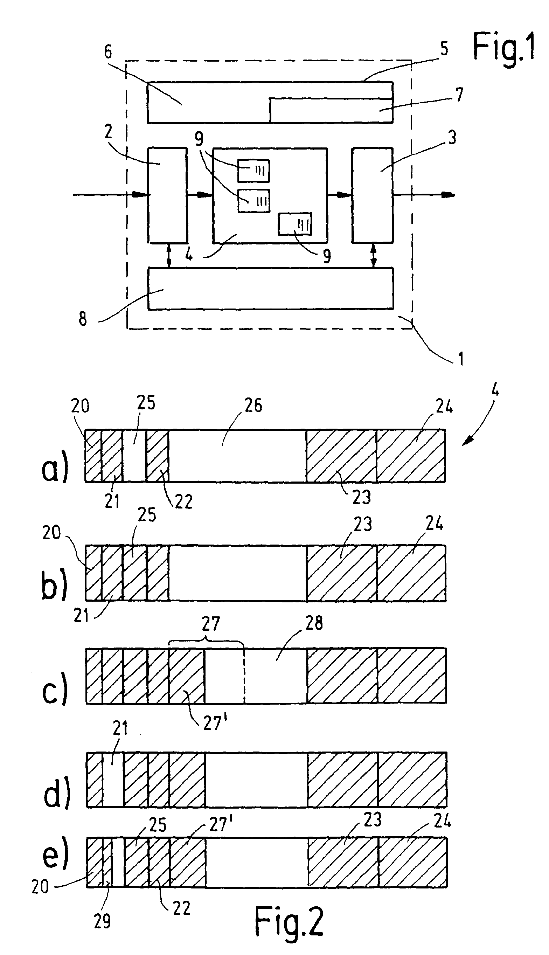

Fig.1 shows the construction of a switching matrix 1 according to the invention diagrammatically by means of a block diagram.

It comprises an input stage 2 which is connected to an ATM input interface (not shown) such as a UTOPIA interface for example. The input stage is designed to process both incoming ATM connections and also narrow-band connections such as connections of the 64 kbit/s type. The function of the input stage 1 is on the one hand to terminate the incoming ATM connections. For this purpose it assigns incoming packets to an AAL connection, checks the sequence numbers of the packets in order, where required, to detect any cells which may have been lost and, if one of the connections is a grouped connection such as an AAL1 connection on which a number of connections with a low transmission rate are combined, splits the data in the packets transmitted into individual connections. The results of the splitting may be individual bytes in the case of AAL1, or packets several bytes long in the case of AAL2 or AAL5. Individual bytes of a 64 kbit/s connection are treated as packets 1 byte long in the switching matrix.

Packets of this kind which are assigned to an established connection are entered in a memory element 4 in areas which have been assigned to this connection at the time. Memory element 4 is a high-speed random-access memory such as a dual-port RAM or a plurality of such RAM's. The memory areas assigned are each organised as FIFO's 9 and write access by input stage 2 takes place under the control of an FIFO control circuit 6 which is part of a management unit 5 for the switching matrix.

When memory element 4 comprises a plurality of separate modules, these are in each case sufficiently large to be able to hold a plurality of FIFO's 9.

Control circuit 6 manages a plurality of registers for each FIFO 9. A first register contains a pointer to the start address of the FIFO 9 in memory element 4, a second register contains details of the size of the FIFO 9, a third contains a write pointer which indicates the cell of the FIFO 9 which is to take the next byte on the connection assigned to the FIFO 9 which arrives at input stage 2, and a fourth contains a read pointer which indicates the next byte on the connection which output stage 3 is to emit.

Each FIFO 9 only exists as a functional unit of the switching matrix for as long as the above registers are occupied. The FIFO's can therefore be considered as virtual; when a new connection is made via the switching matrix, they are set up by control circuit 6 to a size appropriate to the transmission rate on this connection and exist only for as long as the connection does. At the end of a connection the FIFO control circuit can allot the storage space which was allotted to the connection in question in whole or in part or along with additional storage space to a new connection which needs to be made.

It is also the function of control circuit 6 to keep each of the pointers updated to the current status and with their help to monitor how full the individual FIFO's 9 are.

The method of managing the FIFO's for connection handling in the switching matrix, or to be more exact process of making FIFO's available and cancelling them, will be explained in more detail with reference to Fig.2, in which case only two types of connection with different transmission rates will be looked at for simplicity's sake. In practice the switching matrix, or rather the connection handling process performed with, is also suitable for handling connections with a plurality of different transmission rates.

Fig.2a shows a randomly selected initial state of occupancy of memory element 4 in which there are three connections with a low transmission rate, such as 64 kbit/s connections, active and two connections with a high transmission rate, such as AAL2 connections, active. The memory areas 20 to 24 assigned to these connections are indicated in the diagram in Fig.2a by hatching. There are two memory areas 25, 26 which are available for handling further connections.

In the state shown in Fig.2b a connection with a low transmission rate has appeared as well. FIFO control circuit 6 has assigned to it a memory area 25 which is large enough for the transmission rate on this connection. With memory element 4 occupied to the extent shown in Fig.2a, a 64 kbit/s connection for example has a memory area 2 bytes in size allotted to it and a packet-oriented connection employing packets which are large than 1 byte receives for each of them an FIFO whose size is twice the size of the packets.

If, in the state shown in Fig.2b, a further packet-oriented connection with a high transmission rate appears, then like the others this might have allotted to it an FIFO 27 which is twice the size of the packets on the connection (see Fig.2c). However, by consulting the contents of its second register, FIFO control circuit 6 can see that the memory area 28 which is still available will not be big enough to provide an FIFO sufficiently large for another connection of the same kind. To avoid a situation where no additional connections can be handled, the new connection which has appeared is therefore only allotted an FIFO 27' of the same size as a packet.

In the state shown in Fig.2d the connection which previously held FIFO 21 has been completed. This FIFO is now available again to be allotted to another, new connection, which is made clear by the absence of the hatching. Since the degree to which the memory element is occupied is still high, a new connection with a low transmission rate is also assigned only half the former FIFO 21, namely one byte 29 (see Fig.2e).

A development of the method described above makes provision for active management of the storage space in the memory element even when a connection is underway, with the object of further improving the handling capacity of the switching matrix. The situation shown in Fig.2a is not ideal for handling capacity. Although the total storage space in areas 25, 26 would be large enough for two FIFO's for packet-oriented connections to be accommodated in it, in fact, since the areas are not continuous, only one additional packet-oriented connection and a plurality of connections with a low transmission rate can be handled (unless the FIFO size is reduced).

To avoid bottlenecks in this regard, in the development the control unit continuously monitors the distribution of the FIFO's in the memory element and attempts to unite separate, unassigned memory areas such as areas 25, 26 by moving an FIFO adjoining one of the memory areas to a second, unassigned memory area. In the case of the situation shown in Fig.2a, FIFO 22 for example would be moved to region 25.

It is possible for a FIFO to be moved even though a connection exists by specifying a new start address for the FIFO and directing the third register containing the write pointer to the start of the new FIFO, while the fourth register containing the read pointer continues to point itself to the previous FIFO for as long as there is untransmitted data in it. Once the old FIFO is completely empty, the fourth register too is directed to the start of the new FIFO and the old FIFO can be released by the control unit in the same way as if the connection had been completed.

The number of FIFO's which can be set up in memory element 4 is limited by the management capacity of FIFO control circuit 6 and in particular by the number of registers available in it. For this reason a switching matrix according to the invention is scalable as desired and there is no longer any restriction to handling capacities of for example 30 or 32 x 64 kbit/s as in conventional switching matrixes.

In the light of the contents of the registers, FIFO control circuit 6 generates a series of control signals, and in particular a so-called full flag which indicates that there is no space left in the FIFO for a packet on the connection and which is output to input stage 2 to indicate that no more data packets can be accepted on the connection, and an empty flag which is set whenever the FIFO contains less than a complete packet for the connection assigned to it.

The latter is used to control a scheduler 7 which forms the part of the management unit 5 responsible for the emission of data. For each connection at the output, it determines when a new cell can be generated. This time depends on the type of connection, and as well as by the empty flag it can also be controlled by a timer, particularly in the case of AAL2 connections, or by the synchronous clock signal of the switching matrix (SETS).

Where required the scheduler 7 can also be used to compensate for clock signal slippage during transmission.

The functions of the output stage 3 are in each case the reverse of those of the input stage. Initiated by scheduler 7, it generates ATM cells for emission, i.e. it reads out packets from the virtual FIFO's of memory element 4, re-combines a plurality of individual connections which have been handled separately in the switching matrix into groups, and generates the overhead information which is required for reliable transmission to a receiver or another network node.

In a preferred variant of the invention, input stage 2 monitors the individual narrow-band connections for their activity when there is a connection whose data is composed of the data belonging to a plurality of narrow-band connections such as 64 kbit/s connections. If it finds that one of these narrow-band connections is transmitting blank data, i.e. is inactive, it reports this to control unit 5 and does not pass on the blank data received to memory element 4. Control unit 5 reports this to output stage 3, which then no longer enquires for packets for the narrow-band connection concerned from the memory element and instead automatically emits blank data for this connection. For as long as the inactivity continues, control unit 5 can assign the FIFO 9 of the narrow-band connection concerned to another connection on which actual useful data is being transmitted, and in this way appreciably increase the overall throughput of the switching matrix in a simple way.

An optional component which appreciably increases the flexibility of the switching matrix is a co-processor 8. The function of the co-processor is to terminate and generate packets, and particularly AAL2 packets, which contain compressed narrow-band connections, i.e. packets whose data is obtained by joint processing of the data belonging to a plurality of narrow-band connections and in the case of which an assignment cannot be made to a single connection for a single data value. Whereas in the case of AAL2 packets which come from a single source and only have to be switched to a single sink it is irrelevant for the operation of the switching matrix whether these packets are compressed or not, grouped packets of this kind first have to be de-compressed at the input to the switching matrix in order to get back to data which can be assigned to individual narrow-band connections and which can be switched separately, and corresponding processing of the opposite kind is needed at the output to combine the data from narrow-band connections which have been assigned to the same destination in the switching matrix into new packets in the compressed format.

Since the number of ingoing and outgoing connections in a compressed format may vary and uncompressed connections may present themselves for switching at the same time, and since it may also happen that data arriving in compressed form has to be sent on in compressed form or vice versa, it is not essential for the performance of the co-processor 8 to be sufficiently high to cover the full handling capacity of the switching matrix. It is however advantageous in a case like this for the co-processor to be connected both to input stage 2 and to output stage 3 for the exchange of data so that a proportion of its processing capacity can be made available to the input and output as required.

Using a co-processor allows a wide variety of possible combinations of transmission techniques at the input, in the FIFO's and at the output of the switching matrix. At the same time it is also possible for different compression techniques to be used. The following may be mentioned as examples:

| | | |
|---|---|---|
| At the input | In the FIFO | At the output |
| AAL2 (compressed) | 64 kbit/s | 64 kbit/s |
| AAL2 (compressed) | AAL2 (compressed) | 64 kbit/s |
| 64 kbit/s | 64 kbit/s | AAL2 (compressed) |
| 64 kbit/s | AAL2 (compressed) | AAL2 (compressed) |
| AAL2 | AAL2 | AAL2 |
| (Compr.process 1) | (Compr.process 2) | (Compr.process 2) |
| AAL2 | AAL2 | AAL2 |
| (Compr.process 1) | (Compr.process 1) | (Compr.process 2) |
| Volume packing | 64 kbit/s | 64 kbit/s |
| 64 kbit/s | 64 kbit/s | Volume packing |
| Volume packing | AAL2 (compressed) | AAL2 (compressed) |
| AAL2 (compressed) | AAL2 (compressed) | Volume packing |

## Claims

1. Switching matrix for a switching system, having an input stage (2) for assigning incoming data to a connection, a memory element (4) having a plurality of FIFO's (9) which are each time assigned to a connection to buffer-store the incoming data, an output stage (3) for emitting the data buffer-stored in the FIFO's (9), and a control unit, **characterised in that** the control unit (5) is set up to define a sub-area of the memory element (4) as an FIFO (9) and to assign it to a transmission connection extending across the switching matrix.

2. Switching matrix according to claim 1, **characterised in that** the control unit (5) is set up to move an FIFO (9) from a first area of the memory element (4) to a second one.

3. Switching matrix according to claim 1 or 2, **characterised by** means for monitoring the amount of data stored in each FIFO (9).

4. Switching matrix according to claim 1, 2 or 3, **characterised in that** the input stage (2) is capable of determining whether a connection is active or inactive and, where a connection is inactive, of causing incoming blank data to be suppressed and the blank data to be regenerated again at the output stage (3).

5. Switching matrix according to any of claims 1 to 4, **characterised by** a co-processor (8) for the de-compression and/or compression of incoming or outgoing packets.

6. Switching matrix according to claim 5, **characterised in that** the co-processor (8) is connected to the input stage (2) and the output stage (3) to exchange data therewith.

7. Method of connection handling in a switching matrix, in which the data arriving on an input channel is assigned to a connection, is buffer-stored in an FIFO (9) assigned to the connection and is emitted onto an output channel belonging to the connection, **characterised in that** the FIFO (9) is a sub-area of a memory element (4), whose position in the memory area is specified at least when the connection is made.

8. Method according to claim 7, **characterised in that** the position of an FIFO in the memory element is changed to connect unassigned areas (25, 26) of the memory element together.

9. Method according to claim 7 or 8, **characterised in that** the size of each FIFO (9) is specified as a function of the transmission technique on the connection.

10. Method according to claim 9, **characterised in that** the size of each FIFO (9) is specified in accordance with the size of the data packets transmitted on the connection assigned to the FIFO.

11. Method according to any of claims 7 to 10, **characterised in that** the size of the FIFO is specified as a function of the number of active connections in the switching matrix.

12. Method according to any of claims 7 to 11, **characterised in that** blank data belonging to an inactive connection which arrives on an input channel is suppressed on the input side of the switching matrix and is regenerated on the output side.
